(19) **Europäisches Patentamt**
**European Patent Office**
**Office européen des brevets**

(11) **EP 1 279 851 B1**

(12) **EUROPÄISCHE PATENTSCHRIFT**

(45) Veröffentlichungstag und Bekanntmachung des Hinweises auf die Patenterteilung:
**17.01.2007   Patentblatt 2007/03**

(51) Int Cl.:
***F16D 48/06*** *(2006.01)*

(21) Anmeldenummer: **02100777.8**

(22) Anmeldetag: **02.07.2002**

(54) **Verfahren zum Steuern einer automatischen Kraftfahrzeugkupplung**

Method for controlling an automatic motor vehicle clutch

Méthode de commande d'un embrayage automatique de véhicule

(84) Benannte Vertragsstaaten:
**DE FR IT**

(30) Priorität: **26.07.2001   DE 10136625**

(43) Veröffentlichungstag der Anmeldung:
**29.01.2003   Patentblatt 2003/05**

(73) Patentinhaber: **SIEMENS AKTIENGESELLSCHAFT**
**80333 München (DE)**

(72) Erfinder:
• **Bamberger, Joachim**
**82131 Stockdorf (DE)**

• **Horn, Joachim, Dr.**
**80689 München (DE)**
• **Michau, Peter**
**93055 Regensburg (DE)**
• **Nelles, Oliver, Dr.**
**93055 Regensburg (DE)**

(56) Entgegenhaltungen:
| | |
|---|---|
| WO-A-01/63136 | WO-A-02/25131 |
| WO-A-02/25132 | US-A- 4 561 530 |
| US-A- 5 322 150 | |

## Beschreibung

Die Erfindung betrifft ein Verfahren nach dem Oberbegriff von Anspruch 1. Dieses Verfahren dient zum Steuern einer automatischen Kraftfahrzeugkupplung mit einem elektrohydraulischen Kupplungslagesystem, mit dessen Spulenstrom ein hydraulischer Volumenstrom gesteuert wird, der in dem Kupplungslagesystem einen Druck aufbaut und damit die Position der Kupplung festlegt, indem aus einer Sollposition und einer Istposition eine Regelabweichung ermittelt und daraus ein Regelsignal berechnet wird, mit dem die Kupplungsposition gesteuert wird.

Bei einem derartigen Verfahren, das in einer älteren Anmeldung (WO 02/25131 A1) beschrieben ist, wird ein Vorsteuerstrom mit einem inversen Streckenmodell berechnet, wird aus der Regelabweichung mit einem Antiwindup-Algorithmus ein Regelstrom berechnet und zu dem Vorsteuerstrom summiert, und die Summe dieser Signale wird.zum Einstellen der Kupplungsposition verwendet.

Neben den herkömmlichen durch den Fahrer direkt betätigten Kraftfahrzeugkupplungen werden zunehmend automatisch betätigte Kupplungen in Kraftfahrzeugen eingesetzt (siehe zum Beispiel DE 44 34 111 A1). Zur Lageregelung eines elektrohydraulischen Kupplungssystems wird von einem Regelungsalgorithmus ein Sollwert für den elektrischen Strom eines Magnetventils ausgegeben. Dieser Sollwert wird von einem Stromregler eingeregelt. Die Regelung des Magnetstromes erzeugt in der Lageregelstrecke eine Verzögerung. Zu einer weiteren Verzögerung trägt auch der Ventilkolben mit seiner - nicht zu vernachlässigenden - Masse und Reibung bei. Die genannten Verzögerungen führen insgesamt zu einem trägen Stellglied und damit zu einer unbefriedigenden Regelgüte, die bisher hingenommen wurde.

Der Erfindung liegt die Aufgabe zugrunde, ein Verfahren zum Steuern einer automatisch betätigten Kraftfahrzeugkupplung zu schaffen, dessen Regelgüte verbessert ist. Insbesondere soll auch eine möglichst genaue Regelung der Kupplungslage erreicht werden.

Die Aufgabe der Erfindung wird durch ein Verfahren nach Anspruch 1 gelöst. Bei dem Verfahren wird ein inverses Streckenmodell der durch das Kupplungslagesystem gebildeten Regelstrecke erstellt, und das inverse Streckenmodell wird dem Kupplungslagesystem vorgeschaltet und damit die Dynamik des Kupplungslagesystems kompensiert.

Zweckmäßige Weiterbildungen der Erfindung sind in den Unteransprüchen niedergelegt.

Die Vorteile der Erfindung liegen insbesondere in dem geringen Positionsregelfehler, der eine harmonische Anpassung von Motordrehzahl und Getriebeeingangsdrehzahl ergibt, so dass zum Beispiel ein Anfahrvorgang vom Fahrer eines Kraftfahrzeugs als komfortabel wahrgenommen wird.

Ausführungsbeispiele der Erfindung werden im folgenden anhand der Zeichnungen erläutert. Es zeigen:

Figur 1 einen Kraftfahrzeugantrieb mit einer automatisch betätigten Kupplung;

Figur 2 ein Messdiagramm zum Bestimmen der Magnetstromdynamik eines Kupplungslagesystems;

Figur 3 ein Blockschaltbild eines gemäß der Erfindung arbeitenden Regelkreises für ein Kupplungslagesystem;

Figur 4 eine Dynamikkompensationsschaltung des Kupplungslagesystems nach Figur 3;

Figur 5 eine Simulationsschaltung zum Entwickeln und Überprüfen des Kupplungslagesystems nach Figur 3,

Figur 6 den zeitlichen Verlauf des Soll- und des Istwertsignals bei unkompensierter Kupplungslageregelung;

Figur 7 den zeitlichen Verlauf des Soll- und des Istwertsignals bei erfindungsgemäß kompensierter Kupplungslageregelung;

Figur 8 das Ablaufdiagramm eines bei der erfindungsgemäßen Regelung abgearbeiteten Programms;

Figur 9 einen Vergleich des zeitlichen Verlaufs der Sollposition und der erfindungsgemäß geregelten Istposition der Kupplung bei einem Anfahrvorgang, und

Figur 10 den zeitlichen Verlauf der Motordrehzahl und der Getriebeeingangsdrehzahl bei erfindungsgemäß geregelter Kupplungslage.

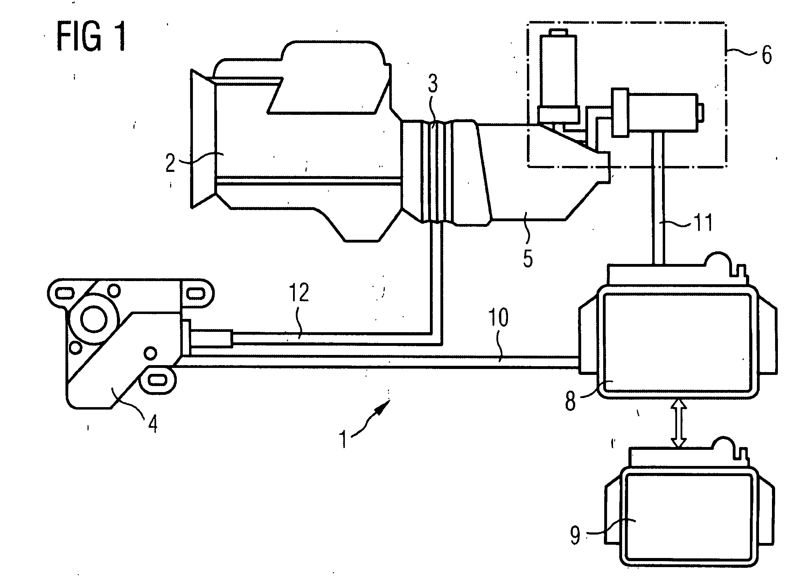

Ein Kraftfahrzeugantrieb 1 (Figur 1) weist - soweit er für die vorliegende Erfindung von Bedeutung ist - folgende Bestandteile auf: einen Motor 2, eine Kupplung 3, einen Kupplungsaktuator (im folgenden auch als Stellglied oder Stellantrieb für die Kupplung bezeichnet) 4, ein Schaltgetriebe 5, einen Getriebeaktuator 6, eine elektronische Steuerung 8 für das Stellglied 4 und den Getriebeaktuator 6 sowie eine Motorsteuerung 9. Die elektronische Steuerung 8 ist mit dem Stellglied 4 durch Steuer- und Signalleitungen 10 und mit dem Getriebeaktuator 6 durch Steuer- und Signalleitungen 11 verbunden.

Das Stellglied 4 kann als elektromotorisch angetriebener oder als hydraulisch angetriebener Aktuator ausgebildet sein. In dem hier beschriebenen Ausführungsbeispiel wird ein hydraulisches Stellglied 4 verwendet, das mit der Kupplung 3 durch eine Kraftübertragungsanordnung 12 verbunden ist, die zum Beispiel als Druckleitung ausgebildet ist.

Bei dem Kraftfahrzeugantrieb 1 ist in dem vorliegenden Ausführungsbeispiel zwar das Schaltgetriebe 5 konstruktiv wie ein Handschaltgetriebe ausgebildet, die Schaltvorgänge werden aber automatisch durchgeführt und die Kupplung 3 wird - durch die elektronische Steuerung 8 gesteuert - betätigt, sobald die Steuerung einen Schaltvorgang einleitet. Ein solches Getriebe wird als automatisches (oder auch: automatisiertes) Handschaltgetriebe, abgekürzt ASG, bezeichnet. Die erfindungsgemäße Kupplungssteuerung kann auch mit automatisch gesteuerten Kupplungen (als EKS bezeichnet) für übliche Handschaltgetriebe verwendet werden, die betätigt werden, sobald der Fahrer an den Schalthebel greift, um einen Gangwechsel durchzuführen, oder aber mit vollautomatischen Schaltgetrieben, die allerdings in der Regel mit einer Nasskupplung oder einem Strömungswandler versehen sind.

Bei dem elektrohydraulischen Kupplungslagesystem des vorstehend beschriebenen Kraftfahrzeugantriebes ist die zu regelnde Größe die Kupplungsposition und die Sollgröße des zugehörigen Regelkreises die Magnet- oder Spulenspannung eines elektromagnetisch betätigten Hydraulikventils. Dieses Ventil steuert einen Ölvolumenstrom, mit dem in einem Hydraulikzylinder ein Druck aufgebaut und damit die Kupplung positioniert wird. Einzelheiten des elektromagnetisch betätigten Hydraulikventils und des Hydraulikzylinders werden hier nicht weiter erläutert, da sie als solche allgemein bekannt sind.

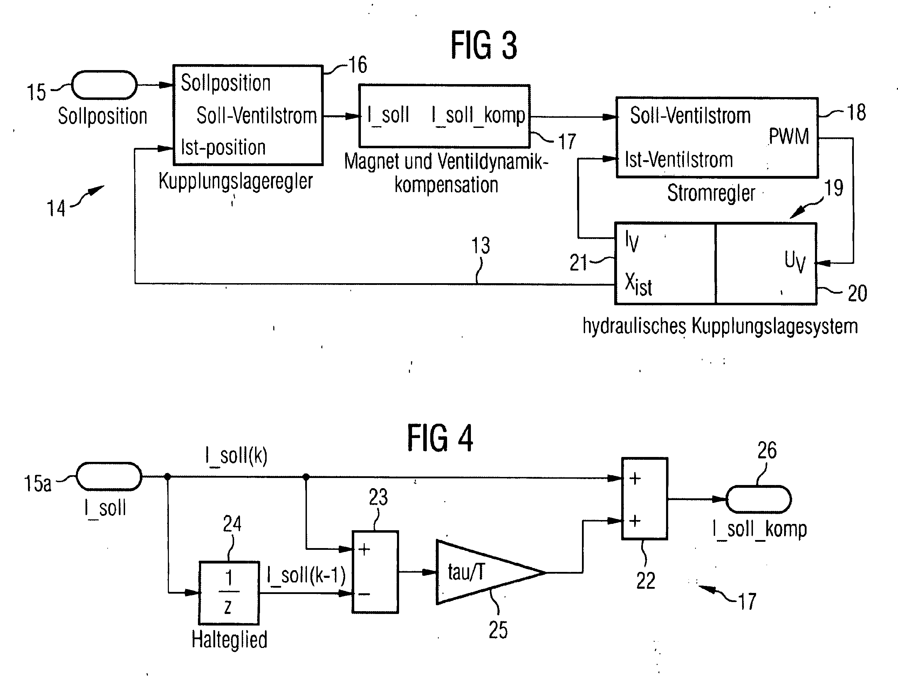

Um die gewünschte Kupplungsposition zu erreichen und zu stabilisieren, wird in einem Regler (16, siehe Figur 3) der Soll- und Istwert der Kupplungsposition verglichen und, beispielsweise mit einem für sich bekannten PD-Algorithmus, eine Reglerausgangsgröße berechnet. Da ein gutes Führungsverhalten des Reglers, insbesondere bei einem Anfahren eines Kraftfahrzeugs, von großer Bedeutung ist wird zusätzlich eine Vorsteuerung verwendet.

Die Ausgangsgröße des Regelalgorithmus, der Sollwert des Magnetstroms, wird in einem unterlagerten Regelkreis geregelt. Die Eingangsgröße des Stromregelkreises ist der Sollwert des Magnetstromes, die Stellgröße ist in unserem Ausführungsbeispiel ein pulsweitenmoduliertes Spannungssignal, das dem elektromagnetischen Hydraulikventil, im folgenden auch als Magnetventil bezeichnet, aufgeschaltet wird. Der Stromregelalgorithmus kann sowohl analog als auch digital realisiert werden. Entscheidend für die Regelgüte des Lageregelkreises ist, dass der berechnete Stromsollwert ausreichend schnell an dem Magnetventil anliegt und der Ventilkolben die erforderliche Stellbewegung ausführt.

Sowohl die unterlagerte Stromregelung mit ihrer Dynamik als auch der Ventilkolben mit seiner nicht zu vernachlässigenden trägen Masse und Reibung erzeugen erhebliche Verzugszeiten in dem Lageregelkreis. Hierdurch wird das Stellglied zu langsam, um schnellen Regelvorgängen des Lageregelalgorithmus noch folgen zu können. Daher wird erfindungsgemäß die Dynamik des Stellglieds kompensiert, indem diesem ein inverses Modell der Strom- und Ventilkolbendynamik vorgeschaltet wird. Der zugehörige Algorithmus wurde in der Software eines Getriebesteuergeräts implementiert und in einem Kraftfahrzeug eines bekannten deutschen Herstellers erprobt. Experimentelle Ergebnisse werden weiter hinten dargestellt.

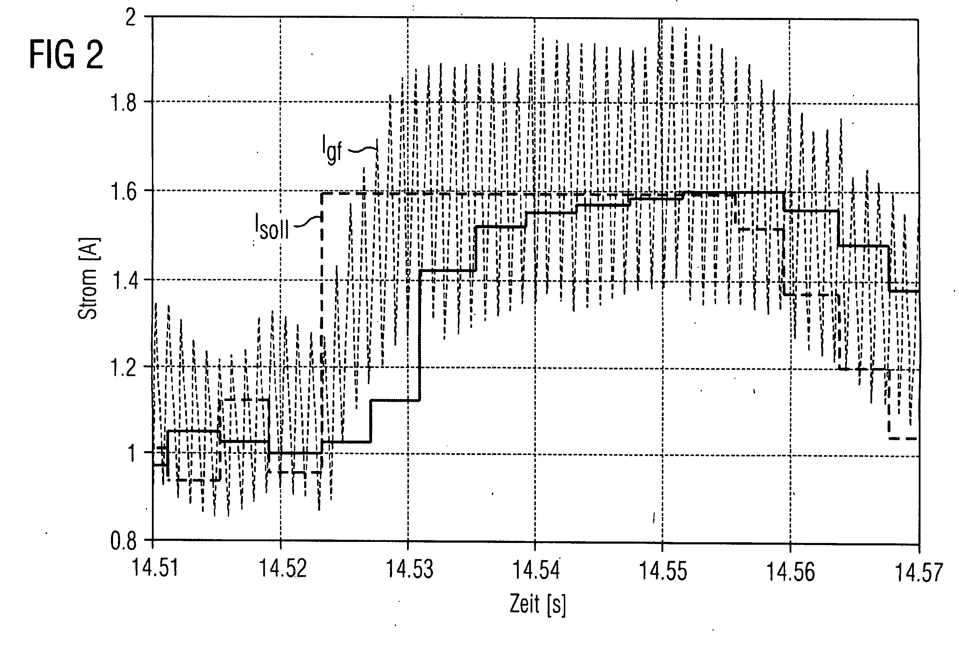

Aus Figur 2 ist das durch Messungen ermittelte dynamische Verhalten des elektromagnetischen Hydraulikventils - im folgenden: die Magnetstromdynamik - ersichtlich. Der Sollverlauf des Stromes $I_{soll}$ ist mit einer dicken gestrichelten Linie und der gemessene Verlauf des Istwerts des Magnetstroms $I_{ist}$ mit einer durchgehenden Linie dargestellt. Man erkennt einen Sprung des Sollverlaufes bei etwa 14.52 sec. Das Iststromsignal ist von einer schnelleren Schwingung $I_{qf}$ mit hoher Amplitude überlagert. Diese Schwingung wird von der Steuerung mit einer pulsweitenmodulierten Spannung erzeugt. Dennoch ist eine Zeitverzögerung zwischen dem Sollsignal und dem Istsignal deutlich zu erkennen. Das Istsignal ist nach etwa 8 ms bis 10 ms eingeschwungen. Daraus kann auf eine Zeitkonstante von etwa 3 ms geschlossen werden.

Im Datenblatt des im Testfahrzeug verwendeten Ventils wird eine Ausrückzeit des Ventilkolbens von 8 ms angegeben. Messungen an einem Ventilprüfstand ergaben eine Zeitdauer von 4 ms bis 5 ms für das Ausrücken des Ventilkolbens von Mittellage bis zur vollen Ventilöffnung. Der in diesem Fall vom Kolben zurückgelegte Weg beträgt in etwa die Hälfte des gesamten Ausrückweges. Die Messung am Ventilprüfstand bestätigte somit die Angabe des Datenblattes. Es wird daher eine Zeitkonstante von 1 ms bis 2 ms angenommen.

Ein vereinfachtes Modells des elektromagnetischen Ventilantriebsystems wird folgendermaßen bestimmt. Das Magnetventilsystem kann als ein verkoppeltes System mindestens 3. Ordnung beschrieben werden. Es besteht aus einer Differentialgleichung von mindestens 1. Ordnung für die Stromdynamik und einer Bewegungsdifferentialgleichung für den Ventilkolben. Das betrachtete System, das heißt die Regelstrecke, wird zunächst stark vereinfacht durch eine Differentialgleichung 1. Ordnung, hier auch als Streckenmodell bezeichnet, beschrieben

$$\dot{x}_{Ventil}(t) = -\frac{1}{\tau_{Ersatz}} x_{Ventil}(t) + \frac{\alpha}{\tau_{Ersatz}} I_{soll}(t) \qquad (\mathrm{I})$$

mit der Ventilkolbenposition $x_{Ventil}(t)$, dessen zeitlicher Ableitung $\dot{x}_{Ventil}(t)$, einer noch zu bestimmenden Ersatzzeitkonstante $T_{Ersatz}$, einer Proportionalitätskonstante a und dem Sollwert des Magnetstromes $I_{soll}$.

Die Ersatzzeitkonstante $T_{Ersatz}$ kann als Summe der wesentlichen Zeitkonstanten der einzelnen Teilsysteme bestimmt werden. Mit den erwähnten Zeitkonstanten von $T_{Strom}$ ~ 3 ms und $T_{Ventil}$~ 1.5 ms kann somit die Ersatzzeitkonstante $T_{Ersatz}$ berechnet werden zu $T_{Ersalz}$ ~ 4.5 ms. Die Proportionalitätskonstante a ist für die Kompensation der Dynamik nicht von Bedeutung und wird daher nicht betrachtet.

Zum Kompensieren der Dynamik des vereinfachten Ersatzmodells der Kupplungslageregelung wird folgende Gleichung angesetzt:

$$I_{soll}^{Komp} = I_{soll} + \tilde{\tau}\dot{i}_{soll} \qquad\qquad (II)$$

$I_{soll}^{Komp}$ ist das Ausgangssignal des Kompensationsalgorithmus, $I_{soll}$ der vom Lageregler berechnete Sollwert des Magnetstroms und $i_{soll}$ dessen zeitliche Ableitung. $\tilde{\tau}$ ist die Zeitkonstante der Kompensation.

Nach Ersetzen von $I_{soll}$ in Gleichung (I) durch $I_{soll}^{Komp}$ aus Gleichung (II) erhält man

$$\frac{1}{\tau_{Ersatz}}x + \dot{x} = \frac{\alpha}{\tau_{Ersatz}}I_{soll} + \frac{\alpha}{\tau_{Ersatz}}\tilde{\tau}\dot{i}_{soll} \qquad\qquad (III)$$

Durch eine Laplace-Transformation kann man die Übertragungsfunktion

$$H(s) = \frac{x(s)}{I_{soll}(s)} \qquad\qquad (IV)$$

bestimmen zu

$$H(s) = \alpha\frac{1+\tilde{\tau}s}{1+\tau_{Ersatz}s} \qquad\qquad (V)$$

Man erkennt, dass sich für

$$\tau_{Ersatz} = \tilde{\tau} \qquad\qquad (VI)$$

Pol und Nullstelle der Übertragungsfunktion in der Gleichung (V) kürzen und die rein algebraische Übertragungsfunktion

$$H(S) = a \qquad\qquad (VII)$$

verbleibt. Somit wurde das durch das Ersatzmodell dargestellte dynamische Verhalten des Magnetstrom-Ventil-Systems vollständig kompensiert.
Da die gesamte Kupplungslageregelung auf einem Digitalrechner implementiert ist, ist der Kompensationsalgorithmus ebenfalls zeitdiskret zu formulieren. Die in der Berechnungsvorschrift für die Dynamikkompensation in Gleichung (II) verwendete zeitkontinuierliche Ableitung $i_{soll}$ kann im allgemeinen durch verschiedene zeitdiskrete Approximationen ersetzt werden. Im vorliegenden Ausführungsbeispiel wird die Ableitung $i_{soll}$ zum Zeitpunkt $t = t_k$ angenähert durch

$$\dot{I}_{soll}(t = t_k) \approx \frac{1}{\Delta T}(I_{soll}(t_k) - I_{soll}(t_{k-1})) \qquad (\text{VIII})$$

mit der Abtastzeit $\underline{\Delta T}$ und den Sollwerten des Magnetstroms $\underline{I_{soll}}$ zu den Zeitpunkten $t_k$ und $t_{k-1}$.

Die zeitdiskrete Berechnungsvorschrift für die Kompensation lautet somit

$$I_{soll}^{Komp}(t_k) = I_{soll}(t_k) + \frac{\tilde{\tau}}{\Delta T}(I_{soll}(t_k) - I_{soll}(t_{k-1})) \qquad (\text{IX})$$

Bei einem Regelkreis 14 für ein Kupplungslagesystem (Figur 3) gelangt ein die Sollposition der Kupplung festlegendes Steuersignal von einer übergeordneten Steuerung - zum Beispiel der elektronische Steuerung 8 - über einen Signaleingang 15 zu einem ersten Eingang eines Kupplungslagereglers 16. Zu seinem zweiten Eingang gelangt die über eine Signalleitung 13 im Regelkreis 14 rückgekoppelte Istposition $\underline{x_{ist}}$ der Kupplung.

Aus der Abweichung zwischen der Soll- und der Istposition bildet der Kupplungslageregler 16 den Sollwert I_ soll für den Ventilstrom und gibt ihn auf den Eingang eines Kompensationsmoduls 17, in dem die beschriebene Kompensation der Magnet- und Ventildynamik, das heißt des dynamischen Verhaltens des elektromagnetischen Antriebes des die Kupplung betätigenden Kupplungsaktuators 4, durchgeführt und damit ein kompensierter Sollwert I_soll_komp erzeugt wird.

Der kompensierte Sollwert I_soll_komp gelangt als Soll-Ventilstrom zu einem ersten Eingang eines Stromreglers 18, auf dessen zweiten Eingang der Istwert des Ventilstroms $\underline{I_v}$ von einem Ausgang eines hydraulischen Stellglieds oder Kupplungslagesystems 19 rückgeführt wird. Aus Soll- und Ist-Ventilstrom erzeugt der Stromregler ein Stellsignal $\underline{U_v}$ und überträgt es als pulsweitenmodulierte Ventilspannung auf den Eingang des hydraulischen Kupplungslagesystems 19. Dieses besteht aus einem elektromagnetischen Ventil 20 und einem - in der Zeichnung mit der Kupplung zusammengefassten - Kupplungsaktuator 21. Der Stromregler 18 und das elektromagnetische Ventil 20 bilden eine mit dem erfindungsgemäßen Verfahren zu steuernde Regelstrecke.

Das Stellsignal hat die Dimension einer Spannung. Durch das Anlegen dieser Spannung kommt es in dem Magnetventil des elektrohydraulischen Kupplungslagesystems 20 zu einem Stromfluss, dessen Verlauf durch den ohmschen und den induktiven Widerstand des Ventils und der Zuleitung bestimmt wird. Durch den induktiven Anteil, der veränderlich ist und von der Position und der Geschwindigkeit des Steuerkolbens im Innern des Ventils abhängt, erfolgt nach einem Spannungssprung eine Stromänderung - diese ist die Regelgröße des betrachteten Teilsystems -, die aber zeitlich verzögert und damit langsamer als erwünscht auftritt. Und dieser Verzögerung wird durch das erfindungsgemäße Verfahren entgegengewirkt.

Durch den Stromfluss (und nicht durch die Spannung) wird in dem Magneten die magnetische Kraft variiert, mit der der Steuerkolben im Innern des Ventils bewegt wird. Abhängig von der Position des Steuerkolbens tritt nun in dem Hydrauliksystem zur Kupplungslageregelung ein Ölvolumenstrom auf, mit dem wiederum die Position der Kupplung und damit das übertragbare Drehmoment, das vom Motor zu den Antriebsrädern weitergeleitet wird, gesteuert wird.

Von einem zweiten Ausgang des hydraulischen Kupplungslagesystems 20 wird die Istposition der Kupplung über eine Signalleitung 21 wie bereits erwähnt auf den zweiten Eingang des Kupplungslagereglers 16 rückgeführt. Damit ist der Lageregelkreis 14 mit integriertem Stromregler 18 geschlossen.

Einzelheiten des Kompensationsmoduls 17 sind aus Figur 4 ersichtlich, die eine zeitdiskrete Realisierung des vorstehend beschriebenen Kompensationsalgorithmus' darstellt. Der an dem Steuersignaleingang 15 zu einem Zeitpunkt k anliegende Ventilstrom-Sollwert I_soll(k) gelangt an je einen Eingang eines Addierglieds 22, eines Subtrahierglieds 23 und eines Haltegliedes 24. In dem Halteglied 24 bewirkt eine Division durch "z" eine Zeitverzögerung um einen Berechnungszyklus, wobei 1/z die Übertragungsfunktion eines digitalen Regelkreisbauteils darstellt. An dem Ausgang des Haltegliedes 24 wird der Sollwert I_soll(k-1) des Zeitpunkts k-1 ausgegeben und in dem Subtrahierglied 23 von dem Sollwert I_soll(k) abgezogen. Die Differenz wird in dem Multiplizierglied 25 mit tau/T multipliziert, worin tau (= t) die Verzugszeit des Stellantriebs und T die Verzögerungszeit der Berechnung ist. Das Ausgangssignal des Multipliziergliedes 25 wird in dem Addierglied 22 zu dem Sollwert I_soll(k) addiert und liefert an dem Ausgang 26 des Kompensationsmoduls 17 den kompensierten Ventilstrom-Sollwert I_soll_komp.

Das Halteglied 24, das Subtrahierglied 23 und das bewirkten eine Differentiation des Stromsollwertes I_soll, sie können auch durch einen handelsüblichen Differenzierer ersetzt werden. Das Kompensationsmodul 17 führt die zeitdiskrete Berechnung der Kompensation durch, die durch die Gleichung (IX) vorgegeben wird.

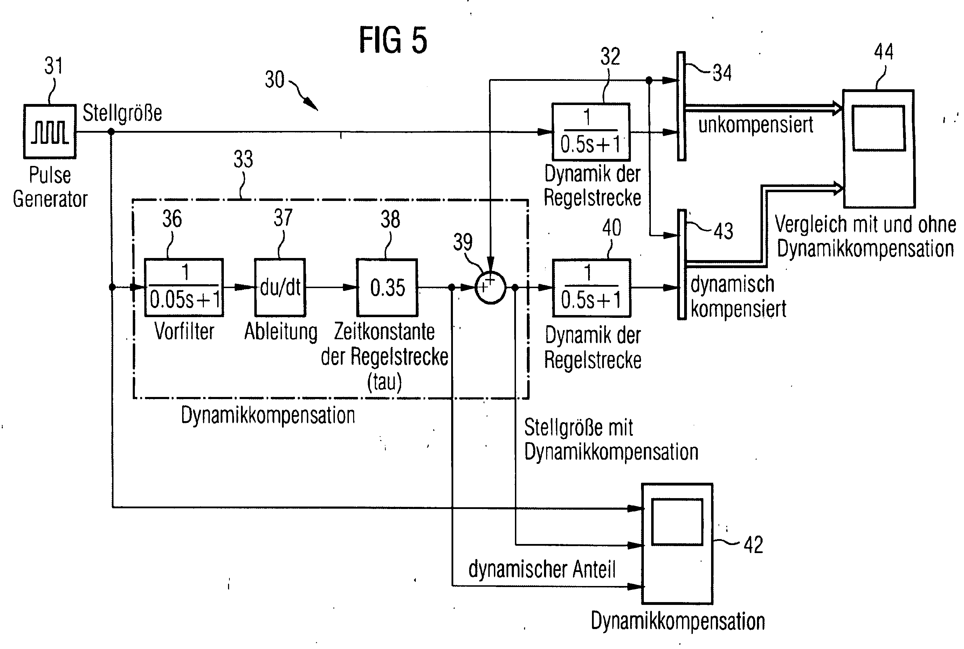

Eine aus Figur 5 ersichtliche Simulationsschaltung 30 dient zum Entwickeln und Überprüfen der Dynamikkompensation der Regelstrecke 20 nach Figur 3. Ein Impulsgenerator 31 erzeugt eine Stellgröße für das Kupplungslagesystem, die an die Eingänge eines Blocks 32 "Modell der Dynamik der Regelstrecke" und eines Blocks 33 "Dynamikkompensation" gelangt. Im folgendem wird für die Blöcke oder Unterprogramme der Simulationsschaltung 30 teilweise der Ausdruck Block weg gelassen und nur die Bezeichnung des Blocks angegeben.

Die Dynamikkompensation 33 enthält ein Vorfilter 36, mit dem bei einer Ableitung zu erwartende Probleme vermieden werden, eine Ableitung 37, eine Zeitkonstante (= tau) 38 der Regelstrecke und ein Addierglied 39. In diesem wird die Stellgröße aus dem Impulsgenerator 31 zu dem Ausgangssignal der Zeitkonstante 38 addiert. Die Summe ergibt eine kompensierte Stellgröße und sie wird übermittelt an einen weiteren Block 40 Modell der Dynamik der Regelstrecke und an ein Anzeigeinstrument 42. An weitere Eingänge des Anzeigeinstruments 42 werden auch die Stellgröße und das Ausgangssignal der Zeitkonstante 38, das den dynamischen Anteil der Stellgröße darstellt, übermittelt.

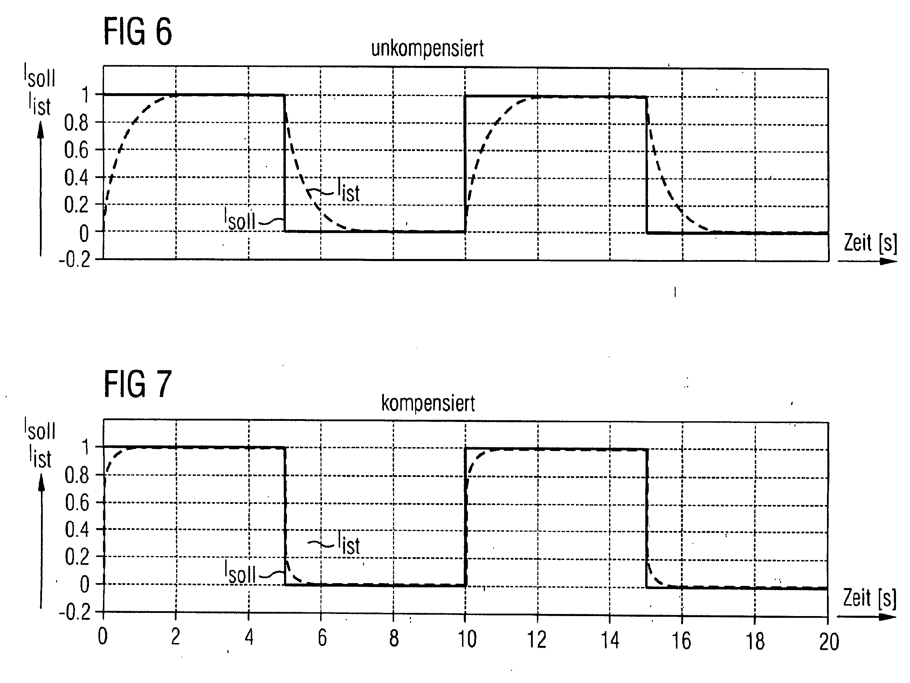

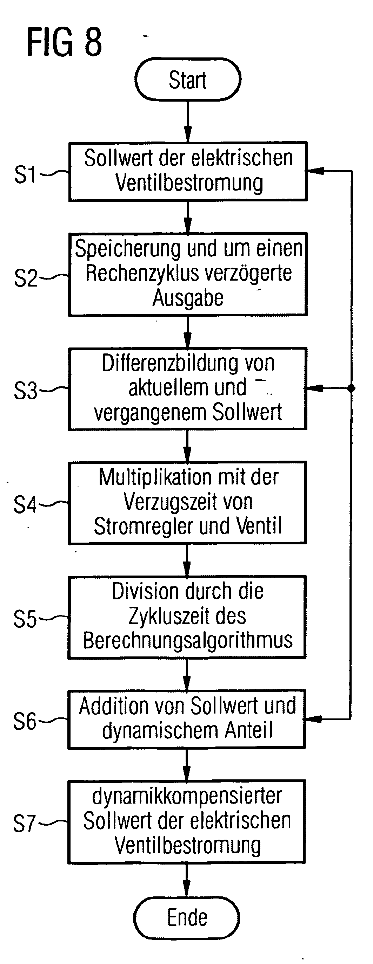

Das Ausgangssignal des Blocks 32 und die Stellgröße werden in einem Multiplexer 34 zusammengefasst und ermöglichen so einen Vergleich zwischen dem Sollwertverlauf und dem nicht kompensierten Istwertverlauf (siehe Figur 6). Das Ausgangssignal der Dynamikkompensation 33 und die Stellgröße werden in einem Multiplexer 43 für einen Vergleich zwischen dem Sollwertverlauf und dem dynamisch kompensierten Istwertverlauf zusammengefasst (siehe Figur 7).

Ein inverses Streckenmodell kann generell durch ein allgemeines Vorfilter erweitert werden. Damit kann im allgemeinen ein gewünschtes Führungsverhalten des Gesamtsystems erreicht werden. Das Vorfilter 36 ist ein konkretes Beispiel, das in zeitkontinuierlicher Form durch die Gleichung

$$y(t) + 0{,}05 * d \, / \, dt * y(t) = u(t) \qquad\qquad (\mathrm{X})$$

beschrieben wird.

Die Ausgangssignale der Multiplexer 34 und 43 werden auf ein Anzeigeinstrument 44 gegeben, das die Stellgrößen mit und ohne Dynamikkompensation miteinander vergleicht und damit die Systemgrößen visualisiert.

Dieses Ergebnis wird in den folgenden zwei Figuren sichtbar gemacht. In Figur 6 ist der zeitliche Verlauf des Sollwerts des Ventilstroms $I_{soll}$ und des Istwerts des Ventilstroms $I_{ist}$ bei unkompensierter Stellgröße dargestellt, während in Figur 7 der zeitliche Verlauf der gleichen Größen bei erfindungsgemäß kompensierter Stellgröße dargestellt ist. Die erreichte Verbesserung de Kupplungslagepositionierung ist offensichtlich.

Bei dem aus Figur 8 ersichtlichen Ablaufdiagramm eines bei der erfindungsgemäßen Kupplungslagepositionierung abgearbeiteten Programms wird nach dem

**Start** in einem Schritt

| | |
|---|---|
| **S1:** | der Sollwert der elektrischen Bestromung des Hydraulikventils des Kupplungsaktuators ermittelt. In einem Schritt |
| **S2:** | wird der Sollwert gespeichert und um einen Rechenzyklus (Zykluszeit T) verzögert ausgegeben. In einem Schritt |
| **S3:** | wird die Differenz zwischen dem aktuellen Sollwert und dem vorherigen Sollwert gebildet. Dann wird in einem Schritt |
| **S4:** | diese Differenz mit der Verzugszeit t des Stromreglers und des Ventils multipliziert. Das Ergebnis wird in einem Schritt |
| **S5:** | durch die Zykluszeit des Rechenalgorithmus' dividiert. In einem Schritt |
| **S6:** | werden der Sollwert und der so ermittelte dynamische Anteil addiert. In einem Schritt |
| **S7:** | wird schließlich ein dynamisch kompensierter Sollwert der elektrischen Ventilbestromung ausgegeben. Damit ist das Programm am |
| **Ende.** | Es wird laufend zyklisch abgearbeitet. |

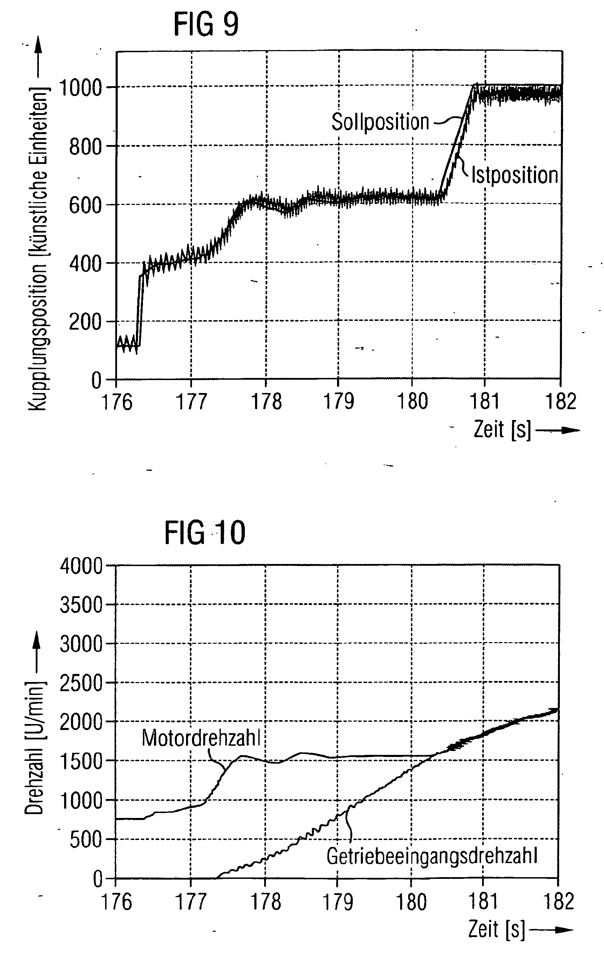

Das erfindungsgemäße Regelungsverfahren wurde in einer Antriebsstrangsteuereinheit implementiert und zur Kupplungslageregelung des automatisierten Schaltgetriebes eines bekannten kommerziellen Kraftfahrzeugs eingesetzt. Für einen Anfahrvorgang, der hohe Anforderungen an die Güte der Kupplungslageregelung stellt, sind die experimentellen Ergebnisse in den Figuren 9 und 10 dargestellt. Bei den Messungen wurde eine Kompensationszeitkonstante $\tilde{\tau}$ von 3 ms verwendet.

Figur 9 zeigt den zeitlichen Verlauf der Sollposition und der Istposition in künstlichen Einheiten, Figur 10 den zeitlichen Verlauf der Motordrehzahl und der Getriebeeingangsdrehzahl in U/min. Die gemessene Istposition ist durch eine hochfrequente Schwingung gestört. Dennoch ist die hohe Regelgüte, d.h. die gute Übereinstimmung von Soll- und Istposition, deutlich zu erkennen. Aufgrund des geringen Positionsregelfehlers erfolgt eine harmonische Anpassung von Motordrehzahl und Getriebeeingangsdrehzahl, so dass der Anfahrvorgang vom Fahrer als komfortabel wahrgenommen wird.

**Patentansprüche**

1. Verfahren zum Steuern einer automatischen Kraftfahrzeugkupplung (3) mit einem elektrohydraulischen Kupplungslagesystem (20) zum Betätigen der Kupplung, mit dessen Spulenstrom ein hydraulischer Volumenstrom gesteuert wird, der in dem Kupplungslagesystem einen Druck aufbaut und damit die Position der Kupplung festlegt, indem aus einer Sollposition und einer Istposition eine Regelabweichung ermittelt und daraus ein Regelsignal (I_soll) berechnet wird, mit dem die Kupplungsposition gesteuert wird,
**dadurch gekennzeichnet,**

   - **dass** ein inverses Streckenmodell (17) einer durch einen Stromregler (18) und ein elektromagnetisches Ventil (20) gebildeten Regelstrecke erstellt wird, und
   - **dass** das inverse Streckenmodell (17) der Regelstrecke vorgeschaltet und damit eine Kompensation (IX) der Dynamik der Regelstrecke durchgeführt wird.

2. Verfahren nach Anspruch 1, **dadurch gekennzeichnet, dass** das inverse Streckenmodell (17) mit einem Vorfilter (36) erweitert und damit ein vorgegebenes Führungsverhalten der Regelstrecke erreicht wird.

3. Verfahren nach Anspruch 1, **dadurch gekennzeichnet,**

   - **dass** ein Sollwert der elektrischen Bestromung des Hydraulikventils des Kupplungslagesystems ermittelt, gespeichert und um einen Rechenzyklus verzögert ausgegeben wird,
   - **dass** die Differenz zwischen dem aktuellen Sollwert und dem vorherigen Sollwert gebildet wird,
   - **dass** die Differenz mir der Verzugszeit (T) des Stromreglers und des Ventils multipliziert wird,
   - **dass** das Ergebnis durch die Zykluszeit des Rechenalgorithmus' dividiert wird,
   - **dass** der Sollwert und der so ermittelte dynamische Anteil addiert werden, und
   - **dass** ein dynamisch kompensierter Sollwert der elektrischen Ventilbestromung ausgegeben wird.

4. Verfahren nach Anspruch 1, **dadurch gekennzeichnet, dass** der Sollwert der elektrischen Bestromung des Hydraulikventils des Kupplungslagesystems in einem unterlagerten Regelkreis geregelt wird.

5. Verfahren nach Anspruch 1, **dadurch gekennzeichnet, dass** ein pulsweitenmoduliertes Spannungssignal als Stellgröße für das elektromagnetische Hydraulikventil erzeugt wird.

6. Verfahren nach Anspruch 1, **dadurch gekennzeichnet, dass** ein vereinfachtes Modell der Regelstrecke durch folgende Differentialgleichung 1. Ordnung beschrieben wird

$$\dot{x}_{Ventil}(t) = -\frac{1}{\tau_{Ersatz}} x_{Ventil}(t) + \frac{\alpha}{\tau_{Ersatz}} I_{soll}(t) \quad,$$

worin $x_{Ventil}(t)$ die Ventilkolbenposition, $\dot{x}_{Ventil}(t)$ deren zeitliche Ableitung, $T_{Ersatz}$ eine Ersatzzeitkonstante, $\alpha$ eine Proportionalitätskonstante und $I_{soll}$ der Sollwert des Magnetstromes sind.

7. Verfahren nach Anspruch 1, **dadurch gekennzeichnet, dass** der dynamisch kompensierte Sollwert der elektrischen Ventilbestromung nach folgender zeitdiskreter Berechnungsvorschrift ermittelt wird

$$I_{soll}^{Komp}(t_k) = I_{soll}(t_k) + \frac{\tilde{\tau}}{\Delta T}(I_{soll}(t_k) - I_{soll}(t_{k-1}))\,,$$

worin $I_{soll}(t_k)$ der Sollwert des Ventilstroms zum Zeitpunkt k, $I_{soll}(t_{k-1})$ der Sollwert des Ventilstroms zum Zeitpunkt k-1, $\tilde{\tau}$ die Zeitkonstante der Kompensation und $\Delta T$ die Abtastzeit sind.

**Claims**

1. Method for controlling an automatic motor vehicle clutch (3) with an electro-hydraulic clutch positioning system (20) for actuating the clutch, the coil current of which controlling a hydraulic volumetric current, which builds up pressure in the clutch positioning system and thus determines the position of the clutch by determining a control deviation from a desired position and an actual position and by calculating a control signal (I_soll) therefrom, by means of which the clutch position is controlled, **characterised in that**

   - an inverse path model (17) of a control path formed by a control loop (18) and an electromagnetic valve (20) is produced and
   - that the inverse path model (17) is arranged upstream of the control path and thus compensates (IX) for the dynamics of the control path.

2. Method according to claim 1, **characterised in that** the inverse path model (17) is extended using a prefilter (36), thereby achieving a predetermined command action of the control path.

3. Method according to claim 1, **characterised in that**

   - a target value of the electrical current feed of the hydraulic valve of the clutch positioning system is determined, saved and output delayed by one processing cycle,
   - the difference between the current target value and the previous target value is formed
   - the difference with the delay time (τ) of the control loop and the valve is multiplied
   - the result is divided by the cycle time of the computing algorithm,
   - the target value and the dynamic part thus determined are added, and
   - a dynamically compensated target value of the electrical valve current feed is output

4. Method according to claim 1, **characterised in that** the target value of the electrical current feed of the hydraulic valve of the clutch positioning system is controlled in a subordinate closed loop control system.

5. Method according to claim 1, **characterised in that** a pulse width modulated voltage signal is generated as a control variable for the electromagnetic hydraulic valve.

6. Method according to claim 1, **characterised in that** a simplified model of the control path is described by the following first order differential equation

$$\dot{\chi}_{Ventil}(t) = -\frac{1}{\tau_{Ersatz}}\chi_{Ventil}(t) = \frac{\alpha}{\tau_{Ersatz}}I_{soll}(t),$$

where $X_{Ventil}(t)$ is the valve piston position, $\dot{X}_{Ventil}(t)$ its time derivative, $T_{Ersatz}$ a replacement time constant, $\alpha$ a proportionality constant and $I_{soll}$ the target value of the magnetic current.

7. Method according to claim 1, **characterised in that** the dynamically compensated target value of the electrical valve current feed is determined according to the following time-discrete computational instruction

$$I_{soll}^{Komp}(t_k) = I_{soll}(t_k) + \frac{\tilde{\tau}}{\Delta T}(I_{soll}(t_k) - I_{soll}(t_{k-1})),$$

where $I_{soll}(t_k)$ is the target value of the valve current at point in time k, $I_{soll}(t_{k-1})$ is the target value of the valve current at point in time k-1, $\tilde{\tau}$ is the time constant of the compensation and $\Delta T$ is the sampling time.

**Revendications**

1. Procédé pour commander un embrayage automatique (3) de véhicule à moteur, comprenant un système de positionnement d'embrayage électro-hydraulique (20) pour actionner l'embrayage, le courant de bobine du système commandant un flux volumétrique hydraulique qui établit une pression dans le système de positionnement d'embrayage et fixe donc la position de l'embrayage en déterminant une déviation de régulation, à partir d'une position de consigne et d'une position réelle, et en calculant un signal de régulation (I_soll) à partir de cette déviation qui commande la position de l'embrayage,
**caractérisé en ce**

   - **qu'**un modèle inverse (17) d'un système commandé formé par un régulateur de courant (18) et une vanne électromagnétique (20) est établi, et
   - **que** le modèle inverse du système réglé (17) est connecté en amont du système commandé, effectuant ainsi une compensation (IX) de la dynamique du système commandé.

2. Procédé selon la revendication 1, **caractérisé en ce que** le modèle inverse du système commandé (17) est complété par un pré-filtre (36), ce qui fournit un comportement de commandement préétabli du système commandé.

3. Procédé selon la revendication 1, **caractérisé en ce**

   - **qu'**une valeur de consigne de l'alimentation en courant de la vanne hydraulique du système de positionnement d'embrayage est déterminée, enregistrée et sortie retardée d'un cycle de calcul,
   - **que** la différence entre la valeur de consigne actuelle et de la valeur de consigne précédente est formée,
   - **que** la différence est multipliée par le temps de retard (t) du régulateur de courant et de la vanne,
   - **que** le résultat est divisé par le temps de cycle de l'algorithme de calcul,
   - **que** la valeur de consigne et la partie dynamique ainsi déterminée sont additionnées, et
   - **qu'**une valeur de consigne dynamiquement compensée de l'activation en courant de la vanne est sortie.

4. Procédé selon la revendication 1, **caractérisé en ce que** la valeur de consigne de la mise en courant électrique de la vanne hydraulique du système de positionnement d'embrayage est régulée dans un circuit de régulation subordonné.

5. Procédé selon la revendication 1, **caractérisé en ce qu'**un signal de tension en modulation d'impulsions en largeur est produit à titre de grandeur de commande de la vanne hydraulique électromagnétique.

6. Procédé selon la revendication 1, **caractérisé en ce qu'**un modèle simplifié du système de commande est décrit par l'équation différentielle de 1$^{er}$ ordre suivante:

$$\dot{x}_{Ventil}(t) = -\frac{1}{\tau_{Ersatz}} x_{Ventil}(t) + \frac{\alpha}{\tau_{Ersatz}} I_{soll}(t) \quad ,$$

dans laquelle $x_{Ventil}(t)$ est la position du piston de la vanne, $\dot{x}_{Ventil}(1)$ sa dérivée par rapport au temps, $\tau_{Ersatz}$ une constante de temps de remplacement, $\alpha$ une constante de proportionnalité, et $I_{soll}$ la valeur de consigne du courant magnétique.

7. Procédé selon la revendication 1, **caractérisé en ce que** la valeur de consigne dynamiquement compensée de la mise en courant de la vanne est déterminée selon l'instruction de calcul à valeurs discrètes en temps suivante :

$$I_{soll}^{Komp}(t_k) = I_{soll}(t_k) + \frac{\tilde{\tau}}{\Delta T}(I_{soll}(t_k) - I_{soll}(t_{k-1})) \quad ,$$

dans laquelle $I_{soll}(t_k)$ est la valeur de consigne du courant de vanne au moment k, $I_{soll}(t_{k-1})$ est la valeur de consigne du courant de vanne au moment k-1, $\tilde{\tau}$ est la constante de temps, et $\Delta T$ est le temps de balayage.

FIG 1

2    3    6

5    11

12   10

4    1    8

9

EP 1 279 851 B1

FIG 2

$I_{gf}$

$I_{soll}$

Strom [A]

Zeit [s]

EP 1 279 851 B1

## FIG 3

Sollposition — 15
Sollposition

16 — Kupplungslageregler
Sollposition | Soll-Ventilstrom
Ist-position

17 — Magnet und Ventildynamik-kompensation
I_soll | I_soll_komp

18 — Soll-Ventilstrom | PWM
Ist-Ventilstrom
Stromregler

19

20 — Iv | Uv
Xist
hydraulisches Kupplungslagesystem

21

13

14

## FIG 4

15a — I_soll

I_soll(k)

24 — $\frac{1}{z}$
I_soll(k-1)
Halteglied

23 — + / −

25 — tau/T

22 — + / +

26 — I_soll_komp

17

# FIG 5

Pulse Generator 31

Stellgröße

30

32
$$\frac{1}{0.5s+1}$$
34
unkompensiert
Dynamik der Regelstrecke

33
Dynamikkompensation

36
$$\frac{1}{0.05s+1}$$
Vorfilter

37
du/dt
Ableitung

38
0.35
Zeitkonstante der Regelstrecke (tau)

39

40
$$\frac{1}{0.5s+1}$$
43
dynamisch kompensiert
Dynamik der Regelstrecke

44
Vergleich mit und ohne Dynamikkompensation

Stellgröße mit Dynamikkompensation

dynamischer Anteil

42

Dynamikkompensation

EP 1 279 851 B1

## FIG 6

unkompensiert

$I_{soll}$
$I_{ist}$

1
0.8
0.6
0.4
0.2
0
-0.2

$I_{ist}$
$I_{soll}$

Zeit [s]

## FIG 7

kompensiert

$I_{soll}$
$I_{ist}$

1
0.8
0.6
0.4
0.2
0
-0.2

$I_{ist}$
$I_{soll}$

Zeit [s]

0   2   4   6   8   10   12   14   16   18   20

EP 1 279 851 B1

## FIG 8

```
                    ┌─────────┐
                    │  Start  │
                    └─────────┘
                         │
                         ▼
         ┌─────────────────────────────────┐
    S1───│  Sollwert der elektrischen       │◄────────┐
         │  Ventilbestromung                │         │
         └─────────────────────────────────┘         │
                         │                            │
                         ▼                            │
         ┌─────────────────────────────────┐         │
    S2───│  Speicherung und um einen        │         │
         │  Rechenzyklus verzögerte         │         │
         │  Ausgabe                         │         │
         └─────────────────────────────────┘         │
                         │                            │
                         ▼                            │
         ┌─────────────────────────────────┐         │
    S3───│  Differenzbildung von            │◄────────┤
         │  aktuellem und                   │         │
         │  vergangenem Sollwert            │         │
         └─────────────────────────────────┘         │
                         │                            │
                         ▼                            │
         ┌─────────────────────────────────┐         │
    S4───│  Multiplikation mit der          │         │
         │  Verzugszeit von                 │         │
         │  Stromregler und Ventil          │         │
         └─────────────────────────────────┘         │
                         │                            │
                         ▼                            │
         ┌─────────────────────────────────┐         │
    S5───│  Division durch die              │         │
         │  Zykluszeit des                  │         │
         │  Berechnungsalgorithmus          │         │
         └─────────────────────────────────┘         │
                         │                            │
                         ▼                            │
         ┌─────────────────────────────────┐         │
    S6───│  Addition von Sollwert und       │◄────────┘
         │  dynamischem Anteil              │
         └─────────────────────────────────┘
                         │
                         ▼
         ┌─────────────────────────────────┐
    S7───│  dynamikkompensierter            │
         │  Sollwert der elektrischen       │
         │  Ventilbestromung                │
         └─────────────────────────────────┘
                         │
                         ▼
                    ┌─────────┐
                    │  Ende   │
                    └─────────┘
```

## FIG 9

## FIG 10